# EUROPEAN PATENT SPECIFICATION

(11) **EP 2 707 315 B1**
(45) Date of publication and mention of the grant of the patent: **25.03.2015**
(21) Application number: 12717135.3
(22) Date of filing: 27.04.2012
(51) Int. Cl.: B65G 39/02

(54) **COMPOSITE ROLLER BODY**
ZUSAMMENGESETZTE WALZENKÖRPER
CORPS DE ROULEAU COMPOSITE

(30) Priority: 13.05.2011 NO 20110711
(43) Date of publication of application: 19.03.2014
(73) Proprietor: Narvik Composite AS, 8512 Narvik (NO)
(72) Inventor: VESTNES, Jarle, N-8516 Narvik (NO)
(74) Representative: Onsagers AS
(86) International application number: PCT/EP2012/057754
(87) International publication number: WO 2012/156194

(56) References cited:
- WO-A1-96/00141
- FR-E- 94 427
- US-A- 5 411 463

## Description

### FIELD OF THE INVENTION

The present invention relates to a composite roller body and a roller device. The invention especially relates to a composite roller body for supporting a conveyor belt used for transporting heavy load, such as ore, coal, stones and crushed stones, various bulk materials etc.

### BACKGROUND OF THE INVENTION

A roller device comprises a tubular or cylindrical roller body and a supporting arrangement, where the roller body is supported by and rotably mounted to a foundation by means of the supporting arrangement. The supporting arrangement comprises bearings provided between the roller body and a shaft. The roller device of the present invention should be used for supporting a conveyor belt used for transporting heavy load as mentioned above. These conveyor belts may be several kilometers long and do often carry the heavy load at a high transport speed.

Today, roller bodies made of steel are most common. They are typically hollow in order to limit their weight and their cost. During use, these bodies will be gradually worn due to friction between the conveyor belt and the surface of the roller body.

When worn, there is a risk that the rotation of the roller body stops due to its uneven outer surface. Another risk is that the rotation of the roller body stops due to failure of the bearing, for example due to dirt etc entering the bearing. A result of this is that the conveyor belt is gliding over the roller body instead of bringing the roller body into rotation. Consequently the friction between the conveyor belt and the roller body increases, which increases the wear of the roller body and also the wear of the conveyor belt. This would normally be the case for both metal roller bodies and roller bodies made of other materials.

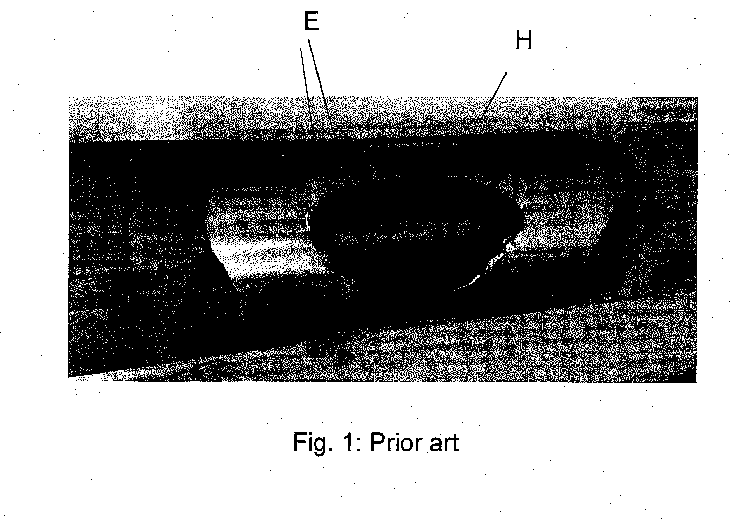

In this situation, there are two risks. The first risk is related to the increased temperature due to the increased friction, which may cause the conveyor belt to ignite, which in turn will damage the conveyor belt severely. The second risk is that a steel roller body becomes so worn that a hole is formed in the surface of the roller body. Fig. 1 shows an image of a worn steel roller body where such a hole H has been formed. The weight of the load on the conveyor belt will push the conveyor belt down and into the hole H, and the edge E of this opening is so sharp that the conveyor belt will get cut and hence damaged severely. Moreover, when the conveyor belt is pushed down into the hole H, the angle between the belt and the edge E makes the edge E very effective in cutting the conveyor belt.

In practice, the costs and work involved in replacing an entire conveyor belt are so large that when a roller body is much less worn than the one shown in fig. 1, the conveyor belt will be stopped immediately until the roller device and/or roller body is replaced.

FR 94 427 describes a roller device for supporting a conveyor belt.

WO 96/00141 describes a shock-absorbing feed roller, and more particularly to a resiliently carried, adjustable feed roller for use in a harvesting unit of a forest processor. The feed roller includes a body which is driven around a rotational axis, a mantle which is intended for engagement with the trunk of a tree and which is spaced radially around the body, and resilient elements loosely disposed in the space between the body and the mantle. The resilient elements function to transmit resiliently radial forces acting between the body and the mantle.

There have been some attempts to make a roller body of composite materials. However, these are only used for relatively light load, they are not considered to fulfill the requirements for support of the heavy load conveyor belts mentioned above.

US 5,411,463 illustrates one roller body according to the preamble of claim 1 for use in the paper industry, where the speed of the roller is the most important design parameter and where it is important to reduce the weight of the roller body. Here, parts of the roller body are made of composite materials. The roller body has an outer shell of metal and a plurality of fiber reinforced elongated foam elements in its interior. The elongated foam elements are substantially wedge-shaped in cross section, and a fabric is provided around each of the bar elements. Resin is applied to the fabric and between the elongated foam elements and is thereafter cured so that the fabric and foam elements form a solid body.

The roller body of US 5,411,463 is not suitable for supporting a heavy load conveyor belt, it will most likely collapse under the weight of a fully loaded conveyor belt carrying the heavy loads mentioned above. Moreover, since the outer shell is made of metal, there is the same risk of forming sharp edges as the outer shell is worn.

The object of the invention is to provide a roller body which can support heavy load conveyor belts and where the risk of damaging the conveyor belt when the roller body becomes worn is avoided. Hence, the object of the invention is to provide a roller body that does not damage the conveyor belt even though it stops. Consequently, it will be possible to plan and perform replacement of worn roller devices more efficiently without the need to stop the conveyor belt immediately due to a risk of damage to the conveyor belt.

In addition, the roller device should have an even and smooth surface to reduce vibrations and noise, and it should also have an even weight distribution in order to avoid unbalanced rotation. The roller construction should reduce vibrations and impacts from the belt to increase bearing lifetime. The roller body should also be made of inflammable composite materials.

Another object of the invention is to reduce the weight of the roller body, in order to reduce the wear of the bearings, and also to reduce the energy needed to drive the conveyor belt. Another purpose is to reduce the weight of the roller body so much that one person can lift the roller device during replacement. The prior art steel roller device requires two persons to lift the roller device.

### SUMMARY OF THE INVENTION

The present invention relates to a composite roller body, comprising an outer layer, a core layer and an inner layer, where the core layer is provided radially between the outer layer and the inner layer; where:
- the core layer comprises:
   - elongated bar elements having a outer surface, a inner surface and two side surfaces where the length of the outer surface is larger than the length of the inner surface, and where the side surfaces of the bar elements are provided in a radial direction;
   - a continuous core fabric provided in a radial direction between the side surfaces of the bar elements and outside the outer surface of every second bar element and inside the inner surface of the bar elements being adjacent to the every second bar elements;
- the outer layer comprises an outer fabric wound around the core layer;
- resin is provided for bonding the outer layer, the core layer and the inner layer to each other.

In one aspect, the resin is provided for bonding the outer fabric, the bar elements and the core fabric to each other.

In one aspect, the resin is provided outside the outer fabric and forms the outer surface of the roller body.

In one aspect, the inner layer comprises an inner fabric bonded to the core layer by means of the resin.

In one aspect, the cross section of the elongated bar elements is trapezoidal, where its two non-parallel sides have equal length.

In one aspect, the number of bar elements in the core layer provides that a chord, defined as having its centre corresponding to the centre of a radial centre line of one bar element, intersects at least three bar elements from their first side surface to their second side surface.

In one aspect, the core fabric comprises multi-axial fibers.

In one aspect, the core fabric comprises fibers oriented in a direction non-parallel with the side surfaces of the bar elements.

In one aspect, the core fabric comprises fibers oriented in a direction parallel with the longitudinal axis of the bar elements.

In one aspect, the core fabric is a fiberglass fabric, aramid, etc.

In one aspect, the roller body is supporting a conveyor belt used for transporting heavy load. Hence, the composite roller body is provided to support a heavy load conveyor belt.

In one aspect, the outer surface and/or the inner surface is curved.

In one aspect, the outer layer is cylindrical.

The present invention also relates to a roller device comprising a composite roller body according to the above, and a supporting arrangement for rotatably supporting the composite roller body in relation to a foundation.

The present invention also relates to a conveyor system, comprising a conveyor belt and a plurality of roller devices as described above.

### DETAILED DESCRIPTION

Embodiments of the invention will now be described with reference to the enclosed drawings, where:
Fig. 1 is an image of a worn steel roller device according to prior art;
Fig. 2 illustrates a cross sectional front view of a first embodiment;
Fig. 3 illustrates a perspective view of an elongated bar element;
Fig. 4 illustrates a cross sectional side view of the first embodiment having 12 bar elements;
Fig. 5 corresponds to fig. 4, where some geometrical parameters are indicated;
Fig. 6 illustrates a core layer of a second embodiment having 16 bar elements;

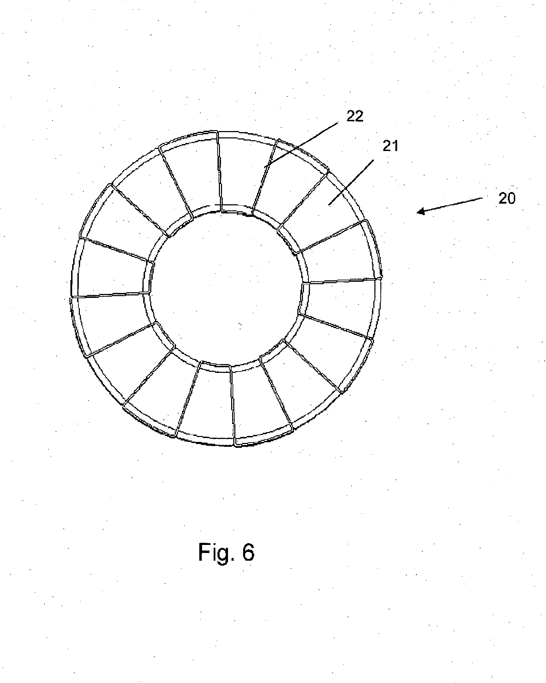

Fig. 6 is an image of a worn roller device with composite roller body from the side;

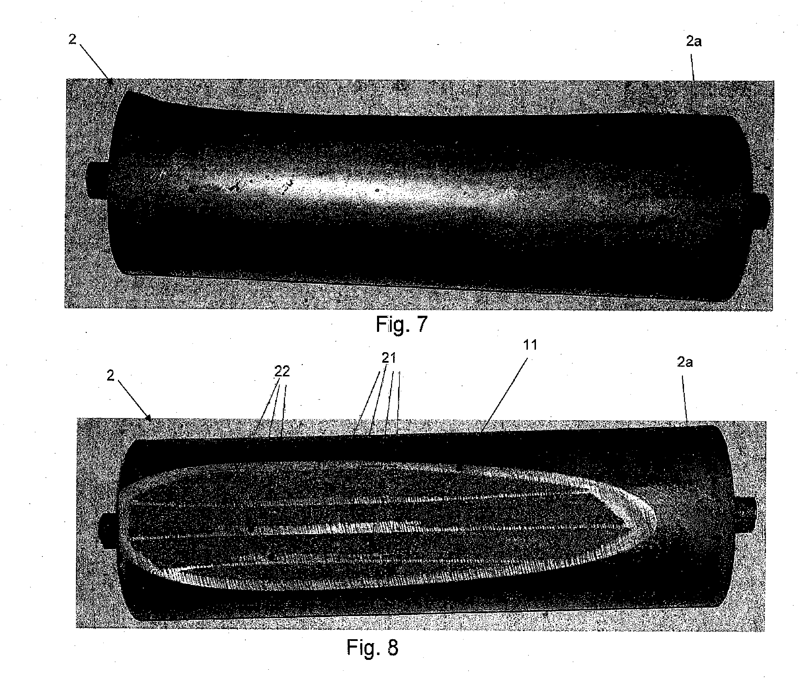

Fig. 7 illustrates a worn roller device with composite roller body from the side;
Fig. 8 illustrates the roller device with composite roller body in fig. 7 from above;

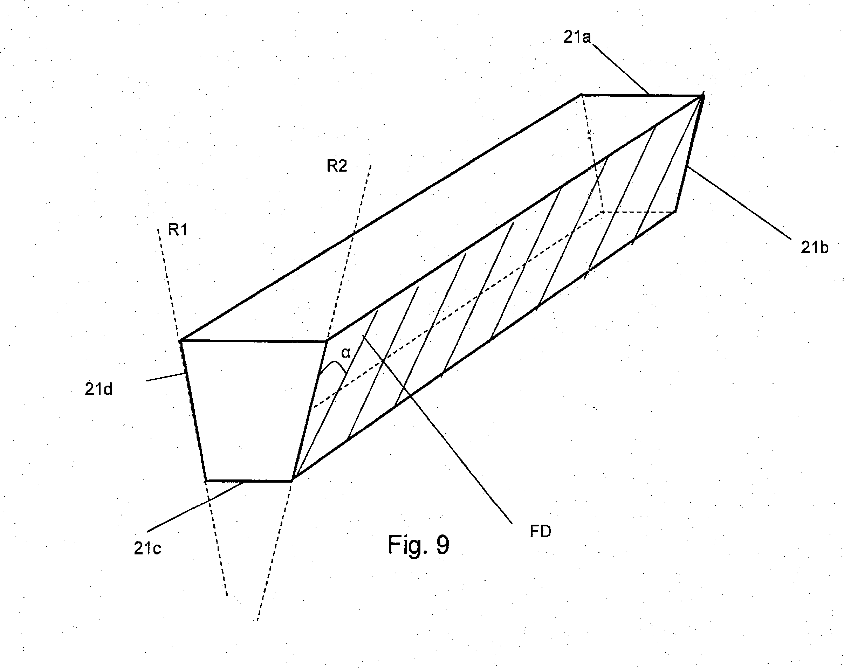

Fig. 9 illustrates some geometrical parameters of the bar element and the core fabric.

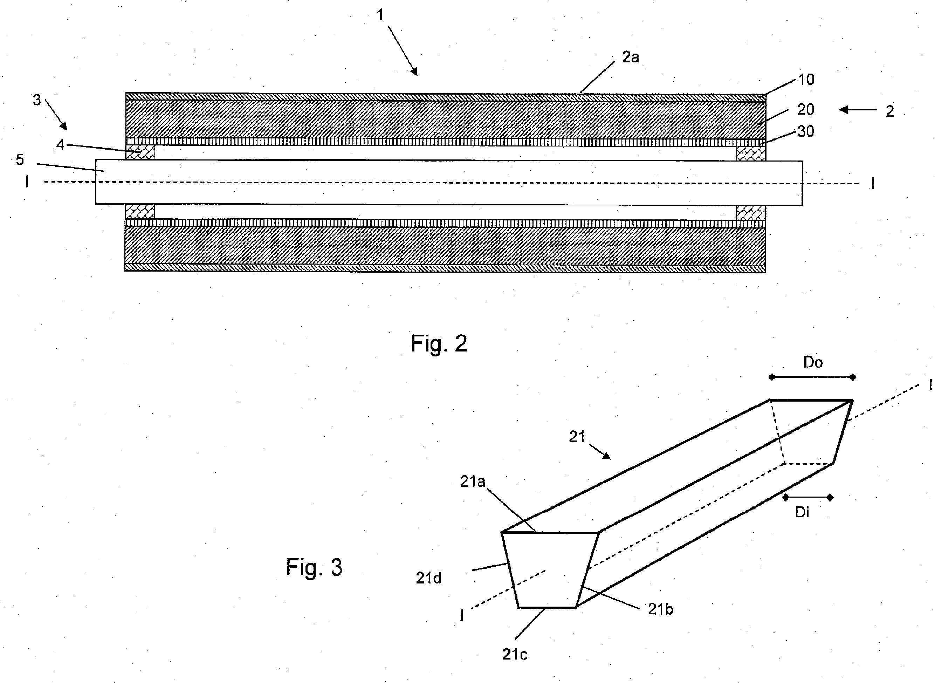

Fig. 1 has been discussed in the introduction above. It is now referred to fig. 2.

Fig. 2 illustrates a cross sectional side view of a roller device 1 comprising a composite roller body 2 and a supporting arrangement 3. The supporting arrangement 3 comprises a bearing arrangement 4 provided between the roller body 2 and a shaft 5. The shaft 5 may be made of metal or another suitable material and is fixed to a foundation (not shown). The roller body 2 may be rotated in relation to the shaft 5 by means of the bearing arrangement 4. The supporting arrangement 3 may also comprise protective covers (not shown) for protecting the bearings 4 from dust etc. from the environment. The supporting arrangement 3 is considered known for a skilled person and will not be described further in detail herein. The longitudinal axis I-I is indicated by a dashed line in fig. 2.

The first embodiment of the composite roller body 2 comprises an outer layer 10, a core layer 20 and an inner layer 30, where the core 20 is provided radially between the outer layer 10 and the inner layer 30. The inner layer 30 is connected to the parts of the bearing arrangement 4 of the supporting arrangement 2.

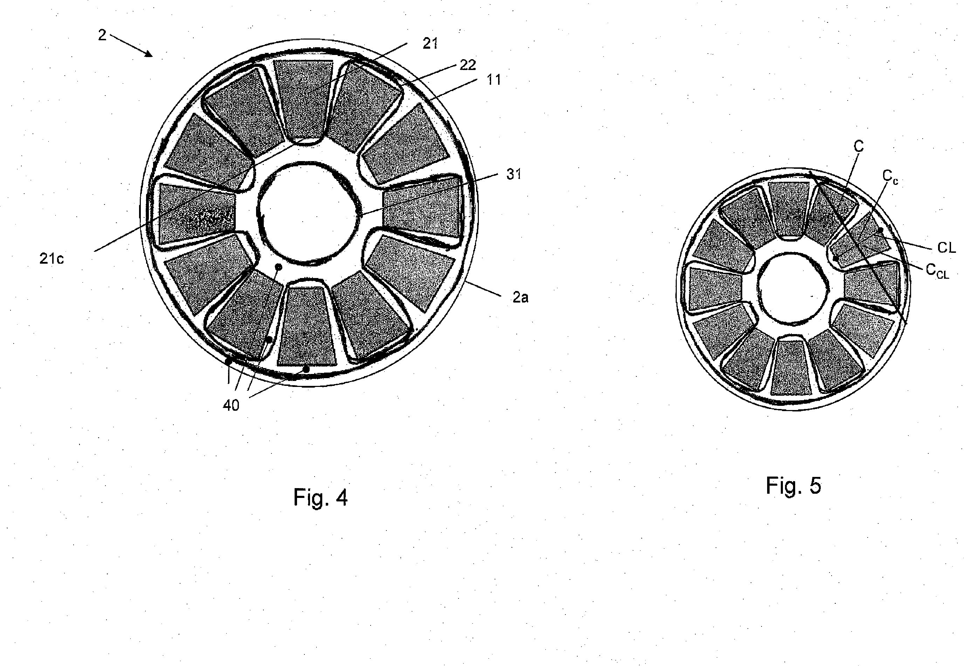

It is now referred to fig. 4.

The outer layer 10 comprises an outer fabric 11 wound around the core layer 20. The core layer 20 comprises elongated bar elements 21 and a core fabric 22. The inner layer 30 comprises an inner fabric 31. The composite roller body further comprises resin 40 for bonding the outer layer 10, the core layer 20 and the inner layer 30 to each other. Hence, the outer layer 10 comprises the outer fabric 11 and resin 40, the core layer comprises the bar elements 21, the core fabric 22 and resin 40 and the inner layer 30 comprises the inner fabric 31 and resin 40.

Hence, the resin 40 is provided for bonding the outer fabric 11, the bar elements 21 and the core fabric 22 to each other. The resin 40 is also provided outside the outer fabric 11 to improve the strength of the roller body and to provide the roller body with a smooth surface. Hence the resin 40 also forms the outer surface of the roller body.

In fig. 3 it is shown that the elongated bar element 21 has a outer surface 21a, a inner surface 21c and two side surfaces 21b, 21d. The length Do of the outer surface 21a is larger than the length Di of the inner surface 21c. In fig. 4 it is shown that the side surfaces 21b, 21d of the bar elements 21 are provided in a radial direction in the core layer 20. Hence, the bar elements 21 forms a cylinder-like structure when the side surfaces 21b, 21d of adjacent bar elements 21 are provided next to each other.

The outer surface 21a is provided radially outside the inner surface 21c. Therefore, the outer surface 21a may be denoted as a "radially outer surface" 21a. The inner surface 21 c is provided radially inside the outer surface 21 a. Therefore, the inner surface 21c may be denoted as a "radially inner surface" 21 c.

In fig. 4 it is shown that the cross sectional shape of the elongated bar elements 21 is trapezoidal, where its two non-parallel sides 21b, 21d have equal length. The parallel sides 21a and 21d are different in length. Hence, the bar elements 21 are substantially wedge-shaped in cross section. Alternatively, the outer surface 21a and/or the inner surface 21c can be curved or have another suitable shape.

The bar elements 21 are made of a light-weight material that attach easily to the resin. Preferably the core elements are made of self-extinguishing materials in case the roller body gets overheated. The bar elements 21 may for example be made of a PVC-foam (PolyVinylChloride).

In fig. 4 it is shown that the core fabric 22 is provided in a radial direction between the side surfaces 21b, 21d of the bar elements (21) and outside the outer surface 21a of every second bar element 21 and inside the inner surface 21c of the bar elements 21 being adjacent to the every second bar elements 21. The core fabric 22 is a continuous fabric, i.e. it is made of one piece of fabric or a fabric assembled from joined or overlapping fabric pieces. That is, the core fabric 22 is provided outside the outer surface 21a of one bar element, then along the first side surface 21b of the bar element 21, which means that it is also provided along the second side surface 21c of the adjacent bar element 21, further inside the inner surface 21 of the adjacent bar element 21 and then along the first side surface 21b of the adjacent bar element 21 before it is provided outside the outer surface 21a of the adjacent bar element 21. This pattern in continued for all bar elements 21 as shown in fig. 4 until the start of the core fabric is met. Here, an overlap or joint between the start and the end of the core fabric is provided. Hence, the core fabric 22 is provided alternatingly outside the radial outer surface 21a and inside the radial inner surface 21 c of the bar elements 21.

It should be noted that the space between each of the bar elements 21 and the space between the fabrics 21, 22 and 31 in fig. 4 is exaggerated to be able to show how the core fabric 22 is provided in relation to the bar elements 21. Fig. 6 illustrates a core layer 20 of a second embodiment more realistic, where core layer 20 with the core fabric 22 is provided tight around and between the bar elements 21 and hence the bar elements 21 are closer to each other than in fig. 4.

The outer layer 11 is cylindrical, and has a cylindrical outer surface.

The production of the roller body will now be described briefly. The inner layer 30 may be produced in a first operation, separate from the production of the core layer 20 and the outer layer 10. Here, the inner fabric 31 is provided as a sleeve in a mould or on a mandrel, and resin is applied to the mould before the resin is hardened during a hardening process. The result is an inner layer 30 in the form of a sleeve comprising the inner fabric 22 and resin 40.

In a second operation, the core fabric 22 and bar elements 21 are arranged as described above around the inner layer 30. The outer fabric 11 is then wound around the core layer 20 and the layers 10, 20 and 30 are provided in a cylindrical mould. Resin 40 is applied to the mould before the resin is hardened during a hardening process. Hence, the resin 40 is used for bonding the outer layer 10, the core layer 20 and the inner layer 30 to each other.

It would also be possible to produce the inner layer 30 in the same molding operation as the core layer 20 and the outer layer 10.

By providing the roller body as described above, it is achieved a roller body which actually can support a heavy load conveyor belt for example for transporting ore. The core fabric 22 holds the roller body together and prevents that the different parts of the roller body separates from each other. At the same time, the load is distributed evenly through the roller body.

It has been found that the radial parts of the resin 40 and the core fabric 22, i.e. the core fabric 22 provided in a radial direction between the side surfaces 21b and 21d of two adjacent bar elements 21, forms a spoke-like structure between the inner layer 30 and the outer layer 10, which prevents deformation and depression of the outer layer 10.

In fig. 5 a radial centre line CL is indicated. The radial centre line CL divides the cross section of the bar element 21 in two equal areas from the outer surface 21a to the inner surface 21c.

The centre of the radial centre line CL is denoted C_{CL}. A chord C is also indicated in fig. 5. The centre of the chord is denoted C_{C}.

The number of bar elements 21 in the core layer 20 provides that the chord C defined as having its centre C_{C} corresponding to the centre C_{CL} of the radial centre line CL of one bar element, intersects at least three bar elements 21 from their first side surface 21b to their second side surface 21d.

A test of the roller body has been performed. The tested roller body had a total diameter of the core body of 16 cm and a length of 56 cm. The length of the radial centre line CL, i.e. the height of the bar element 21, was ca 3 cm. The roller body was mounted for supporting a conveyor belt for transporting iron ore pellets. The conveyor belt was transporting 4000 tons of iron ore per hour. The roller body was fixed, i.e. it was not allowed to rotate together with the movement of the conveyor belt. Hence, it was possible to test the operation life of the roller body and to test if the roller body would damage the conveyor belt when worn.

The roller body was mounted for 14 days. In fig. 7 and 8 it is shown an image of a roller body after a test. Here it is shown that parts of the outer layer 10 have been abraded, and also parts of the core layer 20 has been abraded. The outer fabric 11 of the outer layer can be seen; four bar elements 21 can be seen, and three spoke-like structures formed by the radial parts of the core fabric 22 can be seen.

Even though the roller body was as abraded as in fig. 7 and 8, the roller body was able to support the conveyor belt and load without damaging it. Moreover, even though the edge formed by the outer fabric 11 and resin 40 of the outer layer 10 was relatively sharp, the core layer 20 was able to keep the conveyor belt lifted so that the angle between the belt and the edge did not make the edge very effective in damaging the conveyor belt. Hence, even though the roller body is worn, it still works, which makes it possible to plan the replacement of roller devices more efficiently, without the need for immediate stop of the conveyor belt.

In fig. 4, the number of bar elements 21 is 12. In fig. 6 it is shown that the number of bar elements is 16. It is assumed that a number of bar elements 21 between 10-20 is preferred, of course depending on the outer diameter of the roller body and the length of the roller body. In this way it will be a sufficient number of the spoke-like structures between the bar elements 21.

The fabrics 11, 22 and 31 can be fiberglass fabrics, aramid fabrics or other suitable fabrics. The core fabric 22 of the embodiment described above comprises multi-axial fibers. It has been found that it is preferable if the core fabric 22 comprises fibers oriented in a non-radial direction, i.e. the core fabric between the side surfaces 21b, 21d should not be provided in a radial direction. In this way it has been found that the roller body dampens impacts in a better way. In fig. 9 an angle α is indicated between a radial direction R2 and a fibre direction FD. The angle α should be more than 0°, preferably more than 10° and less than 180°, preferably less than 170°.

It is also found preferably if the core fabric 22 comprises fibers oriented in a direction parallel with the longitudinal axis I-I of the bar elements 21, i.e. with an α = 90°.

In the embodiment described above, the multi-axial fabric comprises fibres having angles α = 45°, a = 90° and α = 135°.

The roller body described above is used as a part of a roller device 1. The roller device 1 comprises the composite roller body 2 described above and the supporting arrangement 3 for rotatably supporting the composite roller body 2 in relation to the foundation.

**Table 1: Weight of roller device with a composite roller body according to the invention compared with weight of corresponding steel roller device**

| Diameter [mm] | Length [mm] | Weight of roller device with composite roller body [kg] | Weight of steel roller device [kg] |
|---|---|---|---|
| 194 | 800 | 17,5 | 30 - 35 |
| 159 | 670 | 13,5 | 22 - 25 |
| 185 | 2000 | 32 | 100 - 145 |

In table 1 it is shown that the weight of a roller device with a composite roller body is considerably reduced when compared with corresponding steel roller devices. Hence, for some dimensions it is possible for one person to replace a roller device with a composite roller body, while two persons are needed to replace the corresponding steel roller device. Moreover, the reduced weight will reduce the wear of the bearings, and also reduce the energy needed to drive the conveyor belt.

## Claims

1. Composite roller body (2), comprising an outer layer (10), a core layer (20) and an inner layer (30), where the core layer (20) is provided radially between the outer layer (10) and the inner layer (30); where:
- the core layer (20) comprises:
- elongated bar elements (21) having a outer surface (21a), a inner surface (21c) and two side surfaces (21b, 21d), where the length (Do) of the outer surface (21a) is larger than the length (Di) of the inner surface (21c), and where the side surfaces (21b, 21d) of the bar elements (21) are provided in a radial direction;
- a continuous core fabric (22) provided in a radial direction between the side surfaces (21 b, 21 d) of the bar elements (21);
- resin (40) is provided for bonding the outer layer (10), the core layer (20) and the inner layer (30) to each other; **characterised in that** the core fabric (22) is provided outside the outer surface (21a) of every second bar element (21) and inside the inner surface (21c) of the bar elements (21) being adjacent to the every second bar elements (21); and **in that**:
- the outer layer (10) comprises an outer fabric (11) wound around the core layer (20);

2. Composite roller body according to claim 1, where the resin (40) is provided for bonding the outer fabric (11), the bar elements (21) and the core fabric (22) to each other.

3. Composite roller body according to claim 1, where the inner layer (30) comprises an inner fabric (31) bonded to the core layer (20) by means of the resin (40).

4. Composite roller body according to claim 1, where the cross section of the elongated bar elements (21) is trapezoidal, where its two non-parallel sides (21b, 21d) have equal length.

5. Composite roller body according to claim 1, where the number of bar elements (21) in the core layer (20) provides that a chord (C), defined as having its centre (C_{C}) corresponding to the centre (C_{CL}) of a radial centre line (CL) of one bar element, intersects at least three bar elements (21) from their first side surface (21b) to their second side surface (21 d).

6. Composite roller body according to any one of claims 1 - 5, where the core fabric (22) comprises multi-axial fibres.

7. Composite roller body according to any one of claims 1 - 6, where the core fabric (22) comprises fibers oriented in a direction non-parallel with the side surfaces (21b, 21d) of the bar elements (21).

8. Composite roller body according to any one of claims 1 - 7, where the core fabric (22) comprises fibers oriented in a direction parallel with the longitudinal axis (I-I) of the bar elements (21).

9. Composite roller body according to any one of claims 1 - 8, where the core fabric (22) is a fiberglass fabric, aramid, etc.

10. Composite roller body according to any one of claims 1 - 9, where the roller body is supporting a conveyor belt used for transporting heavy load.

11. Composite roller body according to claim 1, where the outer surface (21 a) and/or the inner surface (21c) is curved.

12. Composite roller body according to claim 1 or 2, where the resin (40) is provided outside the outer fabric (11).

13. Composite roller body according to claim 1 or 2, where the composite roller body is provided to support a heavy load conveyor belt.

14. Composite roller body according to claim 1, where the outer layer (11) is cylindrical.

15. Roller device (1) comprising a composite roller body (2) according to any one of the above claims and a supporting arrangement (3) for rotatably supporting the composite roller body (2) in relation to a foundation.

16. Conveyor system, comprising:
- a conveyor belt;
- a plurality of roller devices (1) according to claim 15.

## Patentansprüche

1. Verbundrollenkörper (2), eine Außenschicht (10), eine Kernschicht (20) und eine Innenschicht (30) aufweisend, wobei die Kernschicht (20) radial zwischen der Außenschicht (10) und der Innenschicht (30) vorgesehen ist; wobei:
- die Kernschicht (20) aufweist:
- längliche Stabelemente (21) mit einer Außenfläche (21a), einer Innenfläche (21c) und zwei Seitenflächen (21b, 21d), wobei die Länge (Do) der Außenfläche (21a) größer ist als die Länge (Di) der Innenfläche (21c), und wobei die Seitenflächen (21b, 21d) der Stabelemente (21) in einer radialen Richtung vorgesehen sind;
- ein durchgehendes Kerngewebe (22), das in einer radialen Richtung zwischen den Seitenflächen (21b, 21d) der Stabelemente (21) vorgesehen ist;
- Harz (40) vorgesehen ist, um die Außenschicht (10), die Kernschicht (20) und die Innenschicht (30) aneinander zu binden,
**dadurch gekennzeichnet, dass** das Kerngewebe (22) außerhalb der Außenfläche (21a) jedes zweiten Stabelements (21) und innerhalb der Innenfläche (21c) der angrenzend an jedes der zweiten Stabelemente (21) befindlichen Stabelemente (21) vorgesehen ist, und dass die Außenschicht (10) ein Außengewebe (11) aufweist, das um die Kernschicht (20) gewickelt ist.

2. Verbundrollenkörper nach Anspruch 1, wobei das Harz (40) vorgesehen ist, um das Außengewebe (11), die Stabelemente (21) und das Kerngewebe (22) aneinander zu binden.

3. Verbundrollenkörper nach Anspruch 1, wobei die Innenschicht (30) ein Innengewebe (31) aufweist, das mittels des Harzes (40) an die Kernschicht (20) gebunden ist.

4. Verbundrollenkörper nach Anspruch 1, wobei der Querschnitt der länglichen Stabelemente (21) trapezförmig ist, wobei seine zwei nicht parallele Seiten (21b, 21d) dieselbe Länge haben.

5. Verbundrollenkörper nach Anspruch 1, wobei die Anzahl an Stabelementen (21) in der Kernschicht (20) dafür sorgt, dass eine Sehne (C), die so definiert ist, dass ihre Mitte (Cc) der Mitte (C_{CL}) einer radialen Mittellinie (CL) eines Stabelements entspricht, mindestens drei Stabelemente (21) ausgehend von deren erster Seitenfläche (21 b) zu deren zweiter Seitenfläche (21d) schneidet.

6. Verbundrollenkörper nach einem der Ansprüche 1 bis 5, wobei das Kerngewebe (22) Multiaxialfasern umfasst.

7. Verbundrollenkörper nach einem der Ansprüche 1 bis 6, wobei das Kerngewebe (22) Fasern umfasst, die in einer zu den Seitenflächen (21b, 21d) der Stabelemente (21) nicht parallelen Richtung ausgerichtet sind.

8. Verbundrollenkörper nach einem der Ansprüche 1 bis 7, wobei das Kerngewebe (22) Fasern umfasst, die in einer zur Längsachse (I-I) der Stabelemente (21) parallelen Richtung ausgerichtet sind.

9. Verbundrollenkörper nach einem der Ansprüche 1 bis 8, wobei es sich bei dem Kerngewebe (22) um ein Fiberglasgewebe, Aramid etc. handelt.

10. Verbundrollenkörper nach einem der Ansprüche 1 bis 9, wobei der Rollenkörper ein Förderband abstützt, das zum Transportieren von Schwerlast verwendet wird.

11. Verbundrollenkörper nach Anspruch 1, wobei die Außenfläche (21 a) und/oder die Innenfläche (21c) gekrümmt ist.

12. Verbundrollenkörper nach Anspruch 1 oder 2, wobei das Harz (40) außerhalb des Außengewebes (11) vorgesehen ist.

13. Verbundrollenkörper nach Anspruch 1 oder 2, wobei der Verbundrollenkörper zum Abstützen eines Schwerlastförderbands vorgesehen ist.

14. Verbundrollenkörper nach Anspruch 1, wobei die Außenschicht (11) zylindrisch ist.

15. Rollenvorrichtung (1), einen Verbundrollenkörper (2) nach einem der vorstehenden Ansprüche und eine Stützanordnung (3) umfassend, um den Verbundrollenkörper (2) in Bezug auf einen Unterbau drehbeweglich abzustützen.

16. Fördersystem, Folgendes umfassend:
- ein Förderband;
- mehrere Rollenvorrichtungen (1) nach Anspruch 15.

## Revendications

1. Corps de rouleau composite (2), comprenant une couche externe (10), une couche d'âme (20) et une couche interne (30), dans lequel la couche d'âme (20) est prévue de manière radiale entre la couche externe (10) et la couche interne (30), dans lequel :
la couche d'âme (20) comprend :
des éléments de barre allongés (21) ayant une surface externe (21a), une surface interne (21c) et deux surfaces latérales (21b, 21d), dans lequel la longueur (Do) de la surface externe (21a) est supérieure à la longueur (Di) de la surface interne (21c) et dans lequel les surfaces latérales (21b, 21d) des éléments de barre (21) sont prévues dans une direction radiale ;
un tissu d'âme continu (22) prévu dans une direction radiale entre les surfaces latérales (21b, 21d) des éléments de barre (21) ;
de la résine (40) est prévue pour relier la couche externe (10), la couche d'âme (20) et la couche interne (30) entre elles ;
**caractérisé en ce que** le tissu d'âme (22) est prévu à l'extérieur de la surface externe (21a) de chaque second élément de barre (21) et à l'intérieur de la surface interne (21c) des éléments de barre (21) qui sont adjacents à tous les seconds éléments de barre (21) ; et **en ce que** la couche externe (10) comprend un tissu externe (11) enroulé autour de la couche d'âme (20).

2. Corps de rouleau composite selon la revendication 1, dans lequel la résine (40) est prévue pour relier le tissu externe (11), les éléments de barre (21) et le tissu d'âme (22) entre eux.

3. Corps de rouleau composite selon la revendication 1, dans lequel la couche interne (30) comprend un tissu interne (31) relié à la couche d'âme (20) au moyen de la résine (40).

4. Corps de rouleau composite selon la revendication 1, dans lequel la section transversale des éléments de barre allongés (21) est trapézoïdale, dans lequel ses deux côtés non parallèles (21b, 21d) ont une longueur identique.

5. Corps de rouleau composite selon la revendication 1, dans lequel le nombre d'éléments de barre (21) dans la couche d'âme (20) prévoit qu'une corde (C), définie comme ayant son centre (C_{C}) correspondant au centre (C_{CL}) d'une ligne centrale radiale (CL) d'un élément de barre, coupe au moins trois éléments de barre (21), de leur première surface latérale (21b) à leur seconde surface latérale (21d).

6. Corps de rouleau composite selon l'une quelconque des revendications 1 à 5, dans lequel le tissu d'âme (22) comprend des fibres multiaxiales.

7. Corps de rouleau composite selon l'une quelconque des revendications 1 à 6, dans lequel le tissu d'âme (22) comprend des fibres orientées dans une direction non parallèle aux surfaces latérales (21b, 21d) des éléments de barre (21).

8. Corps de rouleau composite selon l'une quelconque des revendications 1 à 7, dans lequel le tissu d'âme (22) comprend des fibres orientées dans une direction parallèle à l'axe longitudinal (I-I) des éléments de barre (21).

9. Corps de rouleau composite selon l'une quelconque des revendications 1 à 8, dans lequel le tissu d'âme (22) est un tissu en fibres de verre, aramide, etc.

10. Corps de rouleau composite selon l'une quelconque les revendications 1 à 9, dans lequel le corps de rouleau supporte une courroie transporteuse utilisée pour transporter une charge lourde.

11. Corps de rouleau composite selon la revendication 1, dans lequel la surface externe (21a) et/ou la surface interne (21c) est (sont) incurvée(s).

12. Corps de rouleau composite selon la revendication 1 ou 2, dans lequel la résine (40) est prévue à l'extérieur du tissu externe (11).

13. Corps de rouleau composite selon la revendication 1 ou 2, dans lequel le corps de rouleau composite est prévu pour supporter une courroie transporteuse de charge lourde.

14. Corps de rouleau composite selon la revendication 1, dans lequel la couche externe (11) est cylindrique.

15. Dispositif à rouleau (1) comprenant un corps de rouleau composite (2) selon l'une quelconque des revendications ci-dessus, et un agencement de support (3) pour supporter en rotation le corps de rouleau composite (2) par rapport à une base.

16. Système de transporteur, comprenant :
une courroie transporteuse ;
une pluralité de dispositifs à rouleau (1) selon la revendication 15.
